# EUROPÄISCHE PATENTANMELDUNG

(11) **EP 4 570 603 A1**
(43) Veröffentlichungstag der Anmeldung: **18.06.2025**
(21) Anmeldenummer: 24212050.9
(22) Anmeldetag: 11.11.2024
(51) Int. Cl.: B60T 13/66, B60T 17/22, B61C 17/12, B61L 15/00, B61L 27/60, G01M 17/08

(54) **SCHNITTSTELLENEINRICHTUNG UND VERFAHREN ZUM STEUERN EINES FAHRZEUGTESTS**

(30) Priorität: 11.12.2023 DE 102023212462
(71) Anmelder: Siemens Mobility GmbH, 81739 München (DE)
(72) Erfinder: Friedrich, Simon, 91183 Abenberg (DE); Kollmer, Anton, 82296 Schöngeising (DE); Walz, Maximilian, 96114 Röbersdorf (DE)
(74) Vertreter: Siemens Patent Attorneys

(57) **Zusammenfassung**

Die Erfindung bezieht sich unter anderem auf eine Schnittstelleneinrichtung (20) zum Steuern eines Fahrzeugtests eines Eisenbahnschienenfahrzeugs mit einer Anzeigeeinrichtung, die einer Bedienperson der Schnittstelleneinrichtung (20) einen oder mehr auswählbare fahrzeugtestbezogene Befehle anzeigen kann, und einer Steuereinrichtung (21), die dazu ausgestaltet ist, einen an einer Eingabeeinrichtung der Schnittstelleneinrichtung (20) bedienerseitig ausgewählten fahrzeugtestbezogenen Befehl zu verarbeiten und eine Umsetzung des ausgewählten fahrzeugtestbezogenen Befehls zu veranlassen. Die Schnittstelleneinrichtung (20) ist dazu ausgestaltet, als fahrzeugtestbezogenen Befehl einen einzeltestbezogenen Befehl verarbeiten zu können, der die individuelle Durchführung eines einzigen Einzeltests eines zwei oder mehr Einzeltests umfassenden Fahrzeugtests verlangt.

## Beschreibung

Die Erfindung bezieht sich auf eine Schnittstelleneinrichtung zum Steuern eines Fahrzeugtests, ein Computerprogrammprodukt für eine solche Schnittstelleneinrichtung, ein Schienenfahrzeug, das mit einer solchen Schnittstelleneinrichtung ausgestattet ist, sowie auf ein Verfahren zum Steuern eines Fahrzeugtests.

Im Bereich der Eisenbahntechnik sind regelmäßige Fahrzeugtests üblich bzw. vorgeschrieben, bei denen die Bremsanlage überprüft wird. Ein Bremsentest in Form einer benutzergeführten Bremsprobe wird beispielsweise in der "VDV-Schrift 757 Bremsen im Betrieb bedienen und prüfen" im Detail beschrieben.

Wie sich der Druckschrift entnehmen lässt, umfassen Bremsproben im Bereich der Eisenbahntechnik eine Vielzahl an Einzeltests, die erfolgreich absolviert werden müssen, damit die gesamte Bremsprobe, also der durch die Vielzahl an Einzeltests gebildete Fahrzeugtest, insgesamt als bestanden angesehen werden kann.

Der Erfindung liegt die Aufgabe zugrunde, eine Schnittstelleneinrichtung anzugeben, die eine besonders effiziente Steuerung eines Fahrzeugtests, beispielsweise eines Bremsentests eines Schienenfahrzeugs, durch eine Bedienperson, beispielsweise einen Zugführer, ermöglicht.

Diese Aufgabe wird erfindungsgemäß durch eine Schnittstelleneinrichtung mit den Merkmalen gemäß Patentanspruch 1 gelöst. Vorteilhafte Ausgestaltungen der erfindungsgemäßen Schnittstelleneinrichtung sind in Unteransprüchen angegeben.

Danach ist erfindungsgemäß vorgesehen, dass die Schnittstelleneinrichtung dazu ausgestaltet ist, als einen fahrzeugtestbezogenen Befehl einen einzeltestbezogenen Befehl verarbeiten zu können, der die individuelle Durchführung eines einzigen Einzeltests eines zwei oder mehr Einzeltests umfassenden Fahrzeugtests verlangt.

Ein wesentlicher Vorteil der erfindungsgemäßen Schnittstelleneinrichtung ist darin zu sehen, dass im Falle, dass ein Einzeltest eines zwei oder mehr Einzeltests umfassenden Fahrzeugtests nicht bestanden worden ist, bedienerseitig entschieden werden kann, dass nicht der vollständige Fahrzeugtest wiederholt werden soll, sondern beispielsweise nur der oder diejenigen Einzeltests, die nicht bestanden worden sind. Durch die erfindungsgemäß vorgesehene Möglichkeit einer individuellen Auswahl und Veranlassung von Einzeltests lässt sich somit eine überflüssige Wiederholung bereits bestandener Einzeltests vermeiden und Zeit einsparen.

Ein weiterer wesentlicher Vorteil der erfindungsgemäßen Schnittstelleneinrichtung besteht darin, dass Einzeltests gezielt wiederholt werden können, auch wenn diese bereits zuvor bestanden worden sind, beispielsweise aus Gründen einer bedienerseitig gewünschten Redundanz.

Mit Blick auf eine effiziente Bedienerführung wird es als vorteilhaft angesehen, wenn die Schnittstelleneinrichtung dazu ausgestaltet ist, im Falle, dass ein durch eine bedienerseitige Eingabe verlangter Einzeltest nachfolgend nicht bestanden wird, das Nichtbestehen des Einzeltests mittels der Anzeigeeinrichtung anzuzeigen und eine individuelle Neudurchführung des Einzeltests anzubieten.

Besonders vorteilhaft ist es, wenn die Schnittstelleneinrichtung nicht nur dazu ausgestaltet ist, Einzeltests zu veranlassen, sondern außerdem dazu ausgestaltet ist, die bedienerseitige Eingabe eines solchen fahrzeugtestbezogenen Befehls, der die vollständige Durchführung aller Einzeltests des zwei oder mehr Einzeltests umfassenden Fahrzeugtests verlangt, zu verarbeiten und bei Vorliegen einer solchen Eingabe die vollständige Durchführung aller Einzeltests parallel und/oder konsekutiv zu veranlassen.

Bei der letztgenannten Ausführungsvariante wird es als vorteilhaft angesehen, wenn die Schnittstelleneinrichtung dazu ausgestaltet ist, im Falle, dass der die zwei oder mehr Einzeltests umfassende Fahrzeugtest wegen des Nichtbestehens eines oder mehrerer Einzeltests insgesamt nicht bestanden worden ist, den oder die nicht bestandenen Einzeltests mittels der Anzeigeeinrichtung anzuzeigen und eine individuelle Neudurchführung des oder der betroffenen Einzeltests anzubieten.

Mit Blick auf eine Minimierung des Testaufwands wird es als vorteilhaft angesehen, wenn die Steuereinrichtung jeden individuell neu durchgeführten und anschließend bestandenen Einzeltest auch bezüglich des gesamten Fahrzeugtests als bestanden ansieht und den Fahrzeugtest insgesamt als bestanden ansieht, sobald alle Einzeltests des Fahrzeugtests bestanden worden sind. Mit anderen Worten ist also vorgesehen, dass der Fahrzeugtest auch dann als erfolgreich bestanden gewertet wird, wenn nicht alle Einzeltests beim ersten Mal bestanden werden, sofern zumindest nach einer einmaligen oder mehrmaligen Wiederholung der zunächst nicht bestandenen Einzeltests für diese zu einem späteren Zeitpunkt ein erfolgreiches Ergebnis erzielt wird.

Bezüglich der Arbeitsweise der Schnittstelleneinrichtung wird es außerdem als vorteilhaft angesehen, wenn die Steuereinrichtung jeden individuell neu durchgeführten und nicht bestandenen Einzeltest mittels der Anzeigeeinrichtung erneut anzeigen lässt und für diesen eine erneute individuelle Neudurchführung anbietet und der Zyklus des Neuanbietens und der Neudurchführung von Einzeltests so lange wiederholt wird, bis alle Einzeltests bestanden worden sind und die Schnittstelleneinrichtung den Fahrzeugtest insgesamt als bestanden ansieht oder der Zyklus durch Eingabe eines Abbruchsbefehls an der Eingabeeinrichtung bedienerseitig abgebrochen wird.

Bei dem Fahrzeugtest handelt es sich vorzugsweise um eine benutzergeführte Bremsprobe. Die Einzeltests, die den gesamten Fahrzeugtest bilden, oder zumindest einer der Einzeltests testet vorzugsweise Komponenten eines Bremssystems des Schienenfahrzeugs.

Jeder Einzeltest kann ein oder mehr Testschritte umfassen. Die Testschritte können automatisiert und/oder unter Mitwirken von Testpersonal durchgeführt werden.

Das Steuern des Fahrzeugtests kann somit das Übermitteln von Testbefehlen an Testpersonal umfassen oder allein darin bestehen.

Die Erfindung bezieht sich außerdem auf ein Eisenbahnschienenfahrzeug. Erfindungsgemäß ist bezüglich eines solchen Eisenbahnschienenfahrzeugs vorgesehen, dass dieses mit einer Schnittstelleneinrichtung wie oben beschrieben ausgestattet ist.

Bezüglich der Anordnung der Schnittstelleneinrichtung im Schienenfahrzeug wird es als vorteilhaft angesehen, wenn die Anzeigeeinrichtung und die Eingabeeinrichtung der Schnittstelleneinrichtung in einem Führerstand angeordnet sind, der sich an einem Ende des Eisenbahnschienenfahrzeugs befindet.

Mit Blick auf einen Wendezugbetrieb des Eisenbahnschienenfahrzeugs wird es als vorteilhaft angesehen, wenn das Eisenbahnschienenfahrzeug an jedem seiner beiden Enden jeweils einen Führerstand und eine Schnittstelleneinrichtung aufweist.

Die Steuereinrichtungen sind vorzugsweise jeweils dazu ausgestaltet, eine Übermittlung von Ergebnissen von Fahrzeugtests und/oder durchgeführten Einzeltests vor, während oder nach einem im Rahmen eines Wendezugbetriebs vorgenommenen Führerstandswechsel an die Steuereinrichtung der jeweils anderen Schnittstelleneinrichtung zu übermitteln.

Die Schnittstelleneinrichtungen sind vorzugsweise durch eine sich durch das Eisenbahnschienenfahrzeug erstreckende Daten-übertragungseinrichtung, bei der es sich beispielsweise um einen Datenbus handeln kann, miteinander verbunden.

Die Steuereinrichtungen sind vorzugsweise derart ausgestaltet, dass sie empfangene Testergebnisse der jeweils anderen Schnittstelleneinrichtung als eigene Testergebnisse eigener Einzeltests beziehungsweise eigener Fahrzeugtests ansehen bzw. anerkennen und entsprechend weiterverarbeiten.

Die Erfindung bezieht sich außerdem auf ein Verfahren zum Steuern eines Fahrzeugtests eines Eisenbahnschienenfahrzeugs, wobei mittels einer Anzeigeeinrichtung einer Bedienperson der Schnittstelleneinrichtung zumindest ein auswählbarer fahrzeugtestbezogener Befehl angezeigt wird und ein an einer Eingabeeinrichtung der Schnittstelleneinrichtung bedienerseitig ausgewählter fahrzeugtestbezogener Befehl verarbeitet und eine Umsetzung des eingegebenen fahrzeugtestbezogenen Befehls veranlasst wird. Erfindungsgemäß ist vorgesehen, dass als fahrzeugtestbezogener Befehl ein einzeltestbezogener Befehl verarbeitet wird, der die individuelle Durchführung eines einzigen Einzeltests eines zwei oder mehr Einzeltests umfassenden Fahrzeugtests verlangt.

Bezüglich der Vorteile des erfindungsgemäßen Verfahrens und vorteilhafter Ausgestaltungen des erfindungsgemäßen Verfahrens sei auf die obigen Ausführungen im Zusammenhang mit der erfindungsgemäßen Schnittstelleneinrichtung und deren vorteilhafter Ausgestaltungen verwiesen.

Als vorteilhaft wird es angesehen, wenn nach Eingabe eines fahrzeugtestbezogenen Befehls, der die vollständige Durchführung aller Einzeltests des zwei oder mehr Einzeltests umfassenden Fahrzeugtests verlangt, alle Einzeltests parallel und/oder konsekutiv veranlasst werden. Im Falle, dass der Fahrzeugtest wegen des Nichtbestehens eines oder mehrerer Einzeltests insgesamt nicht bestanden worden ist, werden vorzugsweise der oder die nicht bestandenen Einzeltests angezeigt und es wird vorzugsweise eine individuelle Neudurchführung des oder der betroffenen Einzeltests angeboten. Jeder individuell neu durchgeführte und nachfolgend bestandene Einzeltest wird vorzugsweise auch für den Fahrzeugtest als bestanden angesehen. Der Fahrzeugtest wird vorzugsweise insgesamt als bestanden bewertet, sobald alle Einzeltests des Fahrzeugtests bestanden worden sind.

Die Erfindung bezieht sich außerdem auf ein Computerprogrammprodukt für eine Schnittstelleneinrichtung, beispielsweise einer solchen wie oben beschrieben, zum Steuern eines Fahrzeugtests eines Eisenbahnschienenfahrzeugs. Das Computerprogrammprodukt umfasst ein Anzeigemodul, das zum Erzeugen von Anzeigesignalen geeignet ist, die zum Ansteuern einer Anzeigeeinrichtung dienen und einer Bedienperson der Schnittstelleneinrichtung zumindest einen auswählbaren fahrzeugtestbezogenen Befehl anzeigen können. Das Computerprogrammprodukt umfasst außerdem ein Steuermodul zur Verarbeitung von bedienerseitig eingegebenen fahrzeugtestbezogenen Befehlen und zur Veranlassung einer Umsetzung der eingegebenen Befehle. Das Steuermodul ist erfindungsgemäß dazu ausgestaltet, als fahrzeugtestbezogenen Befehl einen einzeltestbezogenen Befehl verarbeiten zu können, der die individuelle Durchführung eines einzigen Einzeltests eines zwei oder mehr Einzeltests umfassenden Fahrzeugtests verlangt.

Bezüglich der Vorteile des erfindungsgemäßen Computerprogrammprodukts und vorteilhafter Ausgestaltungen des erfindungsgemäßen Computerprogrammprodukts sei auf die obigen Ausführungen im Zusammenhang mit der erfindungsgemäßen Schnittstelleneinrichtung und deren vorteilhafter Ausgestaltungen verwiesen.

Als vorteilhaft wird es angesehen, wenn das Steuermodul nach Eingabe eines fahrzeugtestbezogenen Befehls, der die vollständige Durchführung aller Einzeltests eines zwei oder mehr Einzeltests umfassenden Fahrzeugtests verlangt, alle Einzeltests parallel und/oder konsekutiv veranlasst. Im Falle, dass der Fahrzeugtest wegen des Nichtbestehens eines oder mehrerer Einzeltests insgesamt nicht bestanden worden ist, lässt das Steuermodul vorzugsweise den oder die nicht bestandenen Einzeltests anzeigen und bietet eine individuelle Neudurchführung des oder der betroffenen Einzeltests an. Jeder individuell neu durchgeführte und nachfolgend bestandene Einzeltest wird von dem Steuermodul vorzugsweise für den Fahrzeugtest als bestanden angesehen. Das Steuermodul sieht den Fahrzeugtest vorzugsweise insgesamt als bestanden an, sobald alle Einzeltests des Fahrzeugtests bestanden worden sind.

Die Erfindung wird nachfolgend anhand von Ausführungsbeispielen näher erläutert; dabei zeigen beispielhaft:
- Fig. 1: ein Ausführungsbeispiel für ein mehrgliedriges Schienenfahrzeug, das an seinen Enden jeweils mit einer Schnittstelleneinrichtung ausgestattet ist,
- Fig. 2: näher im Detail ein Ausführungsbeispiel für eine erfindungsgemäße Schnittstelleneinrichtung, die bei dem Schienenfahrzeug gemäß Figur 1 einsetzbar ist, wobei die Figur 2 einen Betriebszustand vor dem Start eines mehrere Einzeltests umfassenden Fahrzeugtests zeigt,
- Fig. 3: die Anzeige auf einem Display der Schnittstelleneinrichtung gemäß Figur 2 nach Beendigung des Fahrzeugtests für den Fall, dass alle Einzeltests erfolgreich bestanden worden sind,
- Fig. 4: die Anzeige auf dem Display der Schnittstelleneinrichtung gemäß Figur 2 nach Beendigung des Fahrzeugtests für den Fall, dass einer der Einzeltests nicht bestanden worden ist,
- Fig. 5: die Anzeige auf dem Display der Schnittstelleneinrichtung gemäß Figur 2 während der Durchführung von Testschritten eines Einzeltests,
- Fig. 6: das Schienenfahrzeug gemäß Figur 1 nach einem Führerstandswechsel, und
- Fig. 7: die Anzeige auf dem Display einer zweiten Schnittstelleneinrichtung des Schienenfahrzeugs gemäß Figur 6 nach erfolgreicher Beendigung des Fahrzeugtests für den Fall, dass einzelne Einzeltests des Fahrzeugtests vor dem Fahrtrichtungswechsel - gesteuert von einer ersten Schnittstelleneinrichtung - erfolgreich bestanden worden waren und die übrigen Einzeltests nach dem Fahrtrichtungswechsel - gesteuert von der zweiten Schnittstelleneinrichtung - bestanden worden sind.

In den Figuren werden der Übersicht halber für identische oder vergleichbare Komponenten stets dieselben Bezugszeichen verwendet.

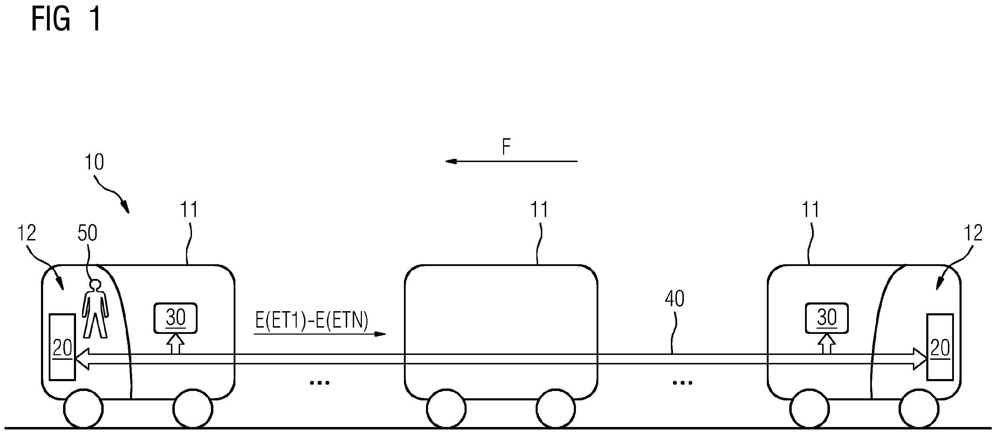

Die Figur 1 zeigt ein Ausführungsbeispiel für ein mehrere Wagen 11 aufweisendes Schienenfahrzeug 10 in Form eines Eisenbahnzugs, der an seinen beiden Enden jeweils mit einer Schnittstelleneinrichtung 20 ausgestattet ist. Das Schienenfahrzeug 10 gemäß Figur 1 ist für einen Wendezugbetrieb ausgestaltet und weist daher an seinen beiden Enden jeweils einen Führerstand 12 auf.

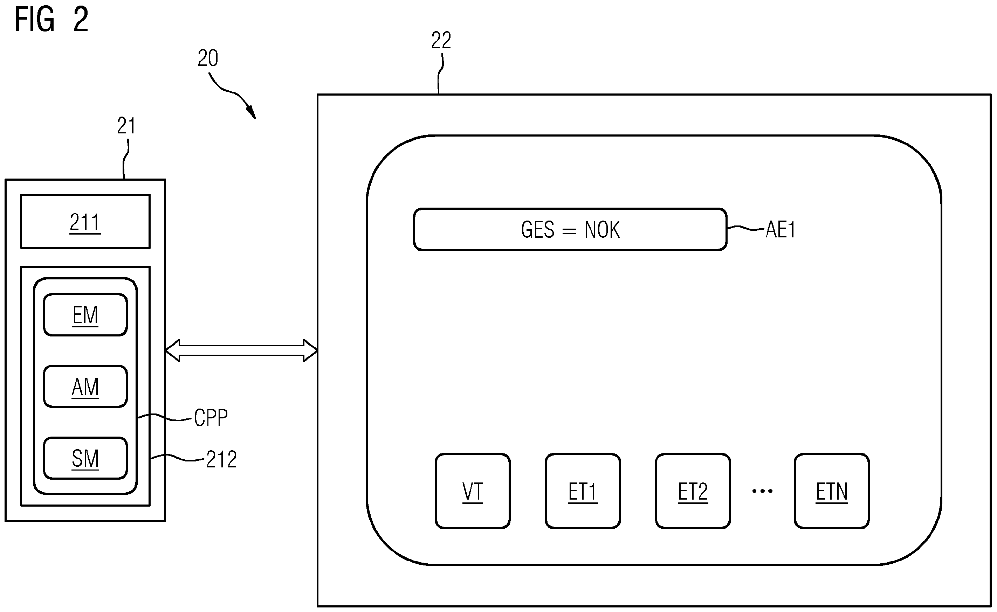

Die beiden Schnittstelleneinrichtungen 20 umfassen jeweils eine Anzeigeeinrichtung, eine Eingabeeinrichtung und eine Steuereinrichtung, für die in den Figuren 2 bis 5 Ausführungsbeispiele näher im Detail gezeigt sind.

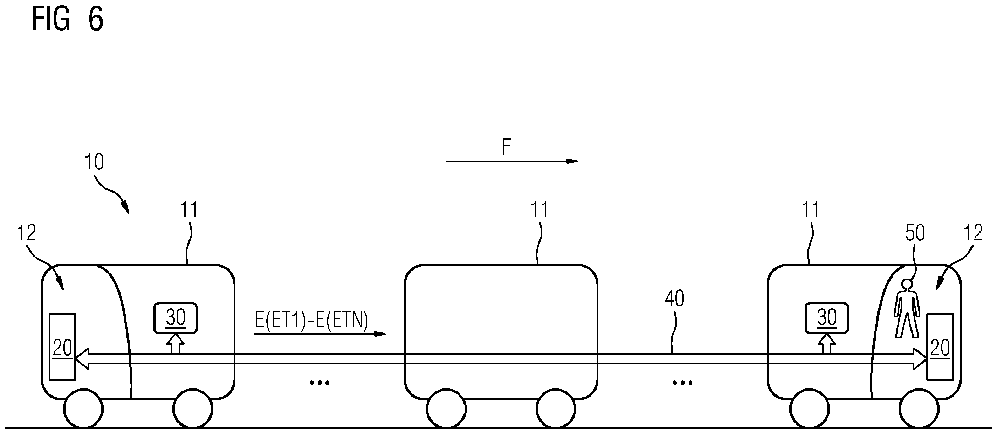

Die Anzeigeeinrichtung und die Eingabeeinrichtung der in der Figur 1 linken Schnittstelleneinrichtung 20 befinden sich in dem Führerstand 12 des in Fahrtrichtung F gesehen ersten Wagens 11 des Schienenfahrzeugs 10; die Anzeigeeinrichtung und die Eingabeeinrichtung der in der Figur 1 rechten Schnittstelleneinrichtung 20 befinden sich in dem Führerstand 12 des in Fahrtrichtung F gesehen letzten Wagens 11 des Schienenfahrzeugs 10. Die Wahl der Bezeichnung des in der Figur 1 linken Wagens 11 als ersten Wagens 11 und der Bezeichnung des in der Figur 1 rechten Wagens 11 als letzten Wagens 11 beruht auf der beispielhaften Annahme einer Fahrtrichtung F von rechts nach links; im Falle einer umgekehrten Fahrtrichtung F - also nach einem Fahrtrichtungswechsel, wie in der Figur 6 gezeigt - bildet der in der Figur 1 linke Wagen 11 den letzten Wagen 11 und der in der Figur rechte Wagen 11 den ersten Wagen 11.

Aufgrund der Anordnung der Anzeige- und Eingabeeinrichtungen in beiden Führerständen 12 ist es somit unabhängig von der Fahrtrichtung F des Schienenfahrzeugs 10 stets möglich, von dem jeweils aktiv im Betrieb befindlichen Führerstand 12 aus eine der beiden Schnittstelleneinrichtungen 20 zu bedienen.

Die Steuereinrichtungen der Schnittstelleneinrichtungen 20 befinden sich vorzugsweise jeweils ebenfalls in dem jeweiligen Wagen 11, beispielsweise in dem jeweiligen Führerstand 12, in dem auch die Anzeigeeinrichtung und die Eingabeeinrichtung ihrer Schnittstelleneinrichtung 20 angeordnet sind.

Um einen Wendezugbetrieb besonders einfach zu ermöglichen, sind vorzugsweise sowohl der erste als auch der letzte Wagen 11 jeweils mit einem die Steuerung des Schienenfahrzeugs 10 ermöglichenden Fahrzeugsteuergerät 30 ausgestattet. Die Steuereinrichtungen der Schnittstelleneinrichtungen 20 können jeweils in das Fahrzeugsteuergerät 30 des ihnen zugeordneten Wagens 11 integriert sein oder durch das jeweilige Fahrzeugsteuergerät 30 gebildet sein; alternativ können die Steuereinrichtungen der Schnittstelleneinrichtungen 20 separate bzw. autarke Einrichtungen sein.

Die beiden Schnittstelleneinrichtungen 20 stehen über ein Datenübertragungssystem miteinander in Verbindung, bei dem es sich beispielsweise um einen sich durch das gesamte Schienenfahrzeug 10 erstreckenden Datenbus 40 handeln kann. Über diesen Datenbus 40 können die Schnittstelleneinrichtungen 20 ihre Testergebnisse untereinander austauschen, wie weiter unten noch näher beispielhaft erläutert wird.

Die Figur 2 zeigt in Form eines schematischen Blockschaltbilds näher in Detail ein Ausführungsbeispiel für eine erfindungsgemäße Schnittstelleneinrichtung 20, die bei dem Schienenfahrzeug 10 gemäß Figur 1 im ersten und letzten Wagen 11 eingesetzt werden kann.

Die Schnittstelleneinrichtung 20 gemäß Figur 2 umfasst eine Steuereinrichtung 21, die als Rechenanlage ausgeführt oder in eine solche integriert ist. Von der Rechenanlage sind in der Figur 1 eine Recheneinrichtung 211 und ein Speicher 212 gezeigt. Die Rechenanlage kann beispielsweise durch ein Fahrzeugsteuergerät 30 gebildet werden, wie bereits oben im Zusammenhang mit der Figur 1 angesprochen wurde.

Mit der Rechenanlage sind eine Anzeigeeinrichtung und eine Eingabeeinrichtung der Schnittstelleneinrichtung 20 verbunden. Bei dem Ausführungsbeispiel gemäß Figur 2 werden die Anzeigeeinrichtung und die Eingabeeinrichtung der Schnittstelleneinrichtung 20 durch ein berührungsempfindliches Display 22 gebildet; alternativ kann es sich bei der Anzeigeeinrichtung und der Eingabeeinrichtung auch um voneinander unabhängige Komponenten handeln.

In dem Speicher 212 der Rechenanlage ist ein Computerprogrammprodukt CPP abgespeichert, das bei Ausführung durch die Recheneinrichtung 211 die Arbeitsweise der Rechenanlage und damit die der Schnittstelleneinrichtung 20 bestimmt oder zumindest mitbestimmt. Das Computerprogrammprodukt CPP umfasst zu diesem Zweck ein Eingabemodul EM, ein Ausgabemodul AM und ein Steuermodul SM.

Das Eingabemodul EM ermöglicht der Steuereinrichtung 21, von einer Bedienperson der Schnittstelleneinrichtung 20, bei der es sich beispielsweise um den in der Figur gezeigten Fahrzeugführer 50 handeln kann, an dem Display 22 eingegebene Befehle zu verarbeiten und entsprechende Eingabesteuersignale an das Steuermodul SM weiterzuleiten.

Bei Vorliegen von Eingabesteuersignalen veranlasst das Steuermodul SM die Umsetzung der von der Bedienperson gewünschten Befehle. Die Befehle können beispielsweise die Durchführung eines vollständigen Fahrzeugtests oder die Durchführung eines Einzeltests des vollständigen Fahrzeugtests verlangen.

Das Ausgabemodul AM ermöglicht der Steuereinrichtung 21, Anzeigesignale zu generieren, mit denen beispielsweise das in der Figur 2 mit dem Bezugszeichen AE1 gekennzeichnete Anzeigeelement auf dem berührungsempfindlichen Display 22 erzeugt wird.

Das Steuermodul SM ist vorzugsweise derart ausgestaltet, dass die Schnittstelleneinrichtung 20 wie folgt arbeitet: Wird die Schnittstelleneinrichtung 20 in einen Fahrzeugtestmodus geschaltet bzw. wird der Fahrzeugtestmodus aktiviert, so werden auf dem Display 22 beispielsweise die in der Figur 2 gezeigten Anzeigeelemente angezeigt.

Da zu dem in der Figur 2 gezeigten Zeitpunkt bzw. zum Zeitpunkt des Starts des Fahrzeugtestmodus noch kein Fahrzeugtest durchgeführt worden ist, zeigt ein Anzeigeelement AE1 durch eine Angabe "NOK" beispielsweise an, dass das Gesamtergebnis GES des vollständigen Fahrzeugtests VT negativ ist, weil der vollständige Fahrzeugtest VT noch nicht bestanden worden ist.

Auf dem Display 22 ebenfalls angezeigte Anzeigeelemente bieten ein Starten des vollständigen Fahrzeugtests VT oder ein individuelles Starten eines jeden Einzeltests ET1, ET2, ... ETN (N > 1) des vollständigen Fahrzeugtests VT an. N bezeichnet hier die Anzahl an Einzeltests ET1-ETN, die den vollständigen Fahrzeugtest VT bilden.

Die letztgenannten Anzeigeelemente bilden gleichzeitig Eingabebuttons, die von der Bedienperson bzw. dem Fahrzeugführer 50 durch Berührung aktiviert werden können, sodass beispielsweise ein vollständiger Fahrzeugtest VT bedienerseitig durch Berühren des entsprechend markierten Anzeigeelements ausgelöst werden kann.

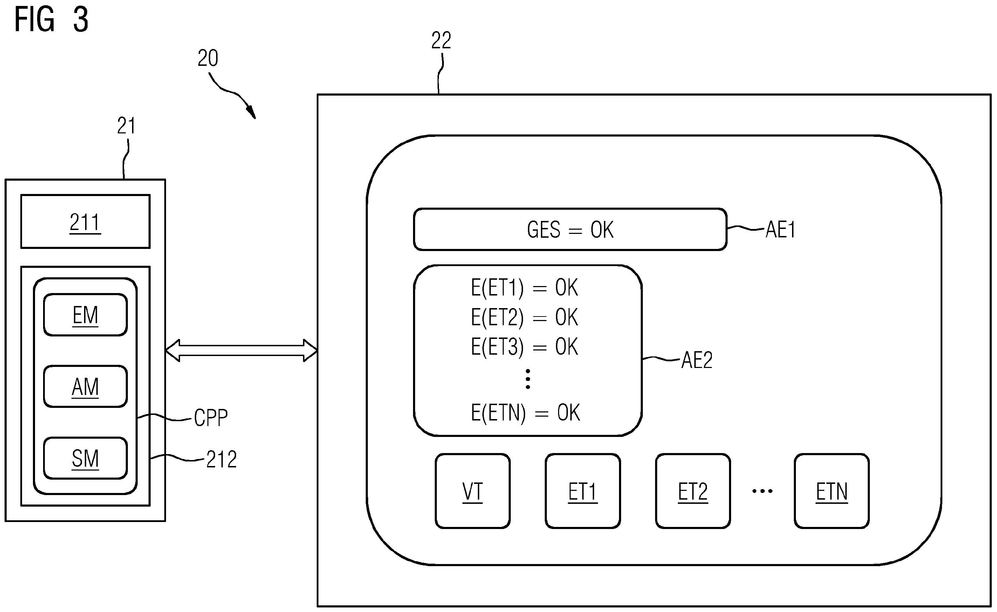

Wird ein solcher vollständiger Fahrzeugtest VT mit allen seinen Einzeltests ET1-ETN bestanden, ist also das Gesamtergebnis GES des Fahrzeugtests positiv, so wird dies beispielsweise auf dem Display 22 mit dem Anzeigeelement AE1 durch die Angabe "OK" angezeigt, wie beispielhaft in der Figur 3 gezeigt ist.

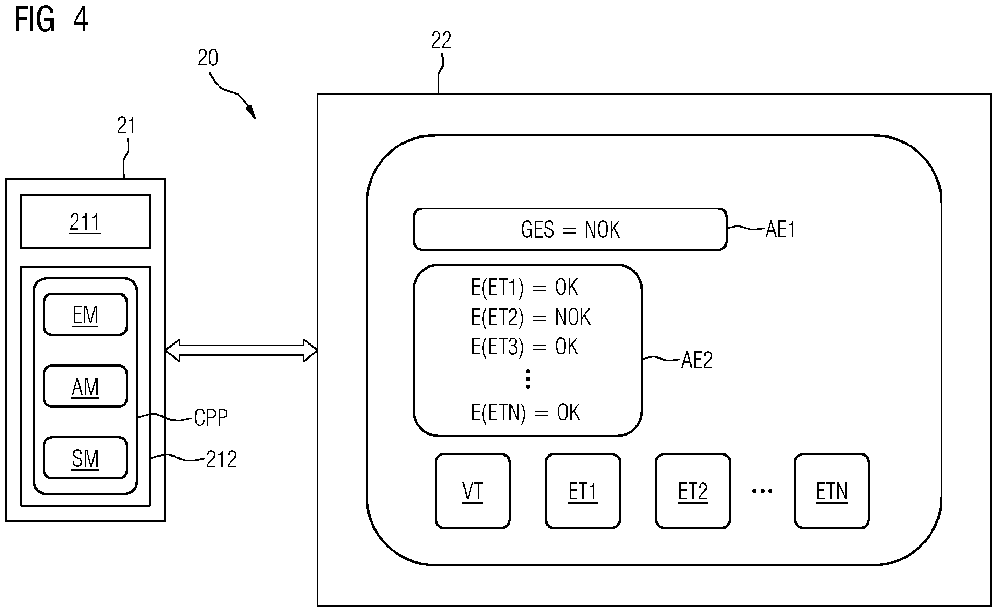

Wird der vollständige Fahrzeugtest VT mit allen seinen Einzeltests nicht bestanden, weil ein oder mehrere Einzeltests ET1-ETN nicht bestanden worden sind, so wird das negative Gesamtergebnis GES auf dem Display 22 mit dem Anzeigeelement AE1 beispielsweise durch die Angabe "NOK", angezeigt, wie beispielhaft in der Figur 4 gezeigt ist.

Außerdem werden vorzugsweise die Ergebnisse E der Einzeltests ET1-ETN mit einem weiteren Anzeigeelement AE2 angezeigt. In der Figur 4 ist eine Situation gezeigt, in der der zweite Einzeltest ET2 nicht bestanden worden ist und dies durch die Angabe "NOK" angezeigt wird; die übrigen Einzeltests ET1, ET3-ETN sind bestanden worden, was durch die Anzeige "OK" signalisiert wird.

Die Anzeige der Ergebnisse E der Einzeltests ET1-ETN ermöglicht es dem Fahrzeugführer 50, gezielt nur den oder die nicht bestandenen Einzeltests ET1-ETN zu wiederholen. Bei den in der Figur 4 gezeigten Ergebnissen kann der Fahrzeugführer 50 also das Anzeigeelement für den zweiten Einzeltest ET2 berühren und dadurch die Wiederholung des zweiten Einzeltests ET2 auslösen.

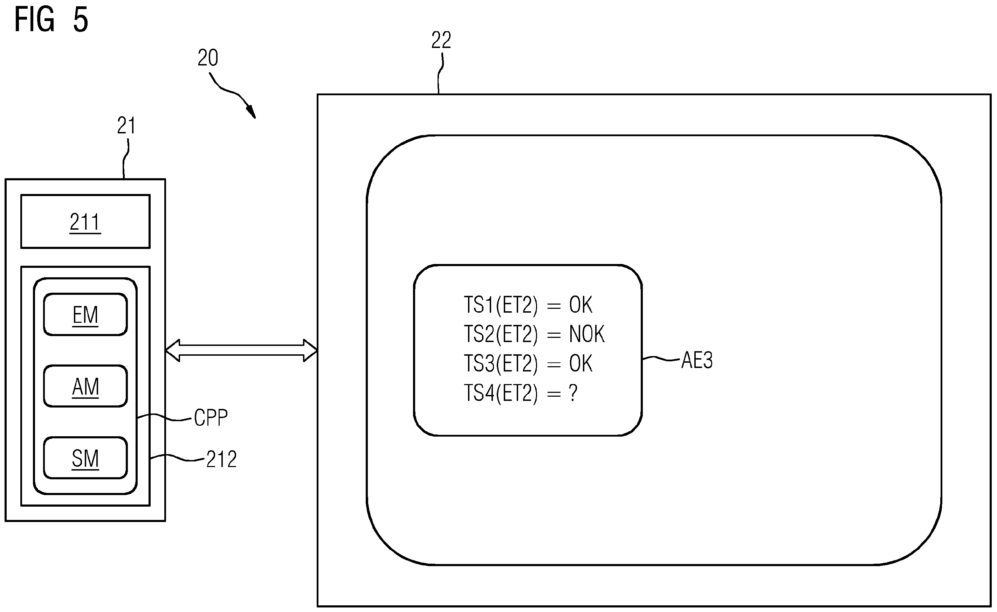

Als vorteilhaft wird es angesehen, wenn während der Testphase die Abarbeitung der Testschritte der Einzeltests angezeigt wird. Die Figur zeigt 5 beispielhaft eine Anzeige durch ein Anzeigeelement AE3 während der Durchführung des zweiten Einzeltests ET2, nachdem der erste und dritte Testschritt TS1 und TS3 des zweiten Einzeltests ET2 bestanden worden sind und der zweite Testschritt TS2 gescheitert ist. Zu dem in der Figur 5 gezeigten Zeitpunkt wird der vierte Testschritt TS4 gerade durchgeführt, sodass dessen Testergebnis noch aussteht; dies wird in Figur 5 durch ein "?" signalisiert.

In entsprechender Weise können die Ergebnisse der Testschritte der übrigen Einzeltests ET1 und ET3-ETN ebenfalls bereits während der Testdurchführung angezeigt werden.

Die Figur 6 zeigt das Schienenfahrzeug 10 gemäß Figur 1 nach einem Fahrtrichtungswechsel, also nachdem die in der Figur 1 gezeigte Fahrtrichtung F von rechts nach links zu einer Fahrtrichtung F von links nach rechts geändert wurde.

In der Figur 6 wird beispielhaft davon ausgegangen, dass vor Beginn des Fahrtrichtungswechsels ein vollständiger Fahrzeugtest VT durchgeführt wurde, wobei das in der Figur 4 gezeigte Testergebnis erzielt wurde, also alle Einzeltests ET1 und ET3-ETN mit Ausnahme des zweiten Einzeltests ET2 bestanden worden sind und auf dem Display 22 der Schnittstelleneinrichtung 20 des in der Figur 6 linken Wagens 11 die in der Figur 4 gezeigte Anzeige des Testergebnisses erfolgt ist.

Um nun nach dem Wechsel der Fahrtrichtung F und nach dem mit diesem erfolgten Wechsel des Führerstands 12 eine komplette Wiederholung des vollständigen Fahrzeugtests VT zu vermeiden, werden die Testergebnisse E(ET1)-E(ETN), die die Schnittstelleneinrichtung 20 des linken Wagens 11 erfasst und angezeigt hat, von der Schnittstelleneinrichtung 20 des linken Wagens 11 zu der Schnittstelleneinrichtung 20 des rechten Wagens 11 übermittelt, sodass das Display 22 der Schnittstelleneinrichtung 20 des rechten Wagens 11 dieselbe in der Figur 4 gezeigte Anzeige der Testergebnisse veranlassen kann wie die Schnittstelleneinrichtung 20 des linken Wagens 11 vor dem Fahrtrichtungswechsel. Die Übermittlung der Testergebnisse ermöglicht es dem Fahrzeugführer 50 somit, bei der oben beschriebenen Testsituation von dem in der Figur 5 rechten Führerstand 12 lediglich den zweiten Einzeltest ET2 erneut auszulösen, um unter Berücksichtigung der früher erzielten positiven Ergebnisse der Einzeltests ET1 und ET3-ETN ein positives Gesamtergebnis GES zu erhalten.

Die Übermittlung der Testergebnisse von dem einem Ende des Schienenfahrzeugs 10 zu dem jeweils anderen Ende des Schienenfahrzeugs 10 kann stets automatisch erfolgen. Alternativ kann vorgesehen sein, dass eine Übertragung nur im Falle eines Fahrtrichtungswechsels bzw. dann erfolgt, wenn der Fahrzeugführer 50 den Führerstand 12 wechselt.

Im Falle eines Führerstandswechsels kann die Übertragung der Testergebnisse von dem zuvor aktiven Führerstand 12 aus vor dem Führerstandswechsel initiiert werden; alternativ oder zusätzlich kann nach dem Führerstandswechsel von dem nachfolgend aktiven Führerstand 12 aus eine Abfrage der bereits vorliegenden Testergebnisse erfolgen.

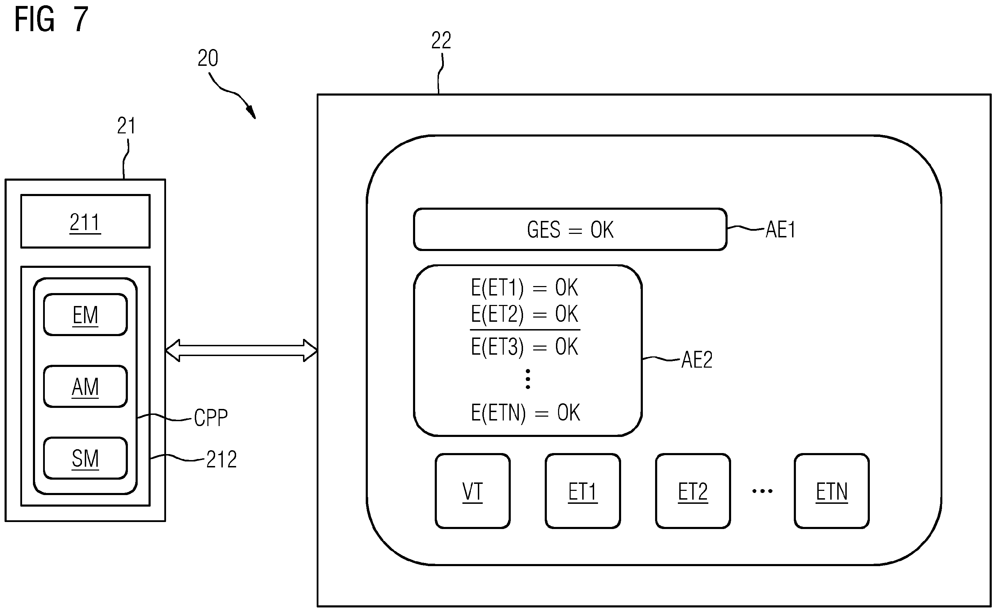

Die Figur 7 zeigt die Darstellung des positiven Gesamtergebnisses GES auf dem Display 22 der in der Figur 6 rechten Schnittstelleneinrichtung 20 für den beispielhaften Fall, dass
- bei der in der Figur 1 gezeigten Fahrtrichtung F die Testdurchführung vom Führerstand 12 des linken Wagens 11 aus erfolgte und die Einzeltests ET1 und ET3-ETN positiv und der zweite Einzeltest ET2 negativ waren,
- die positiven Ergebnisse der Einzeltests ET1 und ET3-ETN und/oder die Information über das Scheitern des zweiten Einzeltests ET2 zu der Schnittstelleneinrichtung 20 des in der Figur 6 rechten Wagens 11 übertragen worden sind, und
- der Fahrzeugführer 50 die Durchführung des zuvor gescheiterten zweiten Einzeltests ET2 von dem in der Figur 6 rechten Führerstand 12 aus erneut veranlasst hat und der zweite Einzeltest ET2 bei der erneuten Durchführung schließlich bestanden wurde.

Bei der Anzeige der Ergebnisse E der Einzeltests ET1-ETN kann berücksichtigt werden, dass die Einzeltests von unterschiedlichen Testdurchläufen stammen. So wird bei der Anzeige gemäß Figur 7 das Ergebnis des von der aktuell aktiven Schnittstelleneinrichtung, also nach dem Führerstandswechsel durchgeführten zweiten Einzeltests ET2 durch Unterstreichung markiert, wohingegen die Testergebnisse E der von der früher aktiven Schnittstelleneinrichtung, also vor dem Führerstandswechsel durchgeführten Einzeltests ET1 und ET3-ETN nicht unterstrichen sind.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

### Bezugszeichenliste

- 10: Schienenfahrzeug
- 11: Wagen
- 12: Führerstand
- 20: Schnittstelleneinrichtung
- 21: Steuereinrichtung
- 22: Display
- 30: Fahrzeugsteuergerät
- 40: Datenbus
- 50: Fahrzeugführer
- 211: Recheneinrichtung
- 212: Speicher

- AE1: Anzeigeelement
- AE3: Anzeigeelement
- AM: Ausgabemodul
- CPP: Computerprogrammprodukt
- E: Ergebnis
- EM: Eingabemodul
- ET1-ETN: Einzeltest
- F: Fahrtrichtung
- GES: Gesamtergebnis
- N: Anzahl an Einzeltests
- NOK: Angabe
- OK: Angabe
- SM: Steuermodul
- TS1-TS4: Testschritt
- VT: vollständiger Fahrzeugtest

## Patentansprüche

1. Schnittstelleneinrichtung (20) zum Steuern eines Fahrzeugtests eines Eisenbahnschienenfahrzeugs mit
- einer Anzeigeeinrichtung, die einer Bedienperson der Schnittstelleneinrichtung (20) einen oder mehr auswählbare fahrzeugtestbezogene Befehle anzeigen kann, und
- einer Steuereinrichtung (21), die dazu ausgestaltet ist, einen an einer Eingabeeinrichtung der Schnittstelleneinrichtung (20) bedienerseitig ausgewählten fahrzeugtestbezogenen Befehl zu verarbeiten und eine Umsetzung des ausgewählten fahrzeugtestbezogenen Befehls zu veranlassen,
- wobei die Schnittstelleneinrichtung (20) dazu ausgestaltet ist, als fahrzeugtestbezogenen Befehl einen einzeltestbezogenen Befehl verarbeiten zu können, der die individuelle Durchführung eines einzigen Einzeltests eines zwei oder mehr Einzeltests umfassenden Fahrzeugtests verlangt.

2. Schnittstelleneinrichtung (20) nach Anspruch 1,
**dadurch gekennzeichnet, dass**
die Schnittstelleneinrichtung (20) dazu ausgestaltet ist, im Falle, dass der durch die bedienerseitige Eingabe verlangte Einzeltest nicht bestanden worden ist, das Nichtbestehen des Einzeltests mittels der Anzeigeeinrichtung anzuzeigen und eine individuelle Neudurchführung des Einzeltests anzubieten.

3. Schnittstelleneinrichtung (20) nach einem der voranstehenden Ansprüche,
**dadurch gekennzeichnet, dass**
die Schnittstelleneinrichtung (20) außerdem dazu ausgestaltet ist, die bedienerseitige Eingabe eines solchen fahrzeugtestbezogenen Befehls, der die vollständige Durchführung aller Einzeltests des zwei oder mehr Einzeltests umfassenden Fahrzeugtests verlangt, zu verarbeiten und bei Vorliegen einer solchen Eingabe die vollständige Durchführung aller Einzeltests parallel und/oder konsekutiv zu veranlassen.

4. Schnittstelleneinrichtung (20) nach Anspruch 3,
**dadurch gekennzeichnet, dass**
die Schnittstelleneinrichtung (20) dazu ausgestaltet ist, im Falle, dass der Fahrzeugtest wegen des Nichtbestehens eines oder mehrerer Einzeltests insgesamt nicht bestanden worden ist, den oder die nicht bestandenen Einzeltests mittels der Anzeigeeinrichtung anzuzeigen und eine individuelle Neudurchführung des oder der betroffenen Einzeltests anzubieten.

5. Schnittstelleneinrichtung (20) nach Anspruch 4,
**dadurch gekennzeichnet, dass**
die Steuereinrichtung (21)
- jeden individuell neu durchgeführten und bestandenen Einzeltest auch bezüglich des Fahrzeugtests als bestanden ansieht und
- den Fahrzeugtest insgesamt als bestanden ansieht, sobald alle Einzeltests des Fahrzeugtest bestanden worden sind.

6. Schnittstelleneinrichtung (20) nach Anspruch 5,
**dadurch gekennzeichnet, dass**
- die Steuereinrichtung (21) jeden individuell neu durchgeführten und nicht bestandenen Einzeltest mittels der Anzeigeeinrichtung erneut anzeigen lässt und für diesen eine erneute individuelle Neudurchführung anbietet und
- der Zyklus des Neuanbietens und der Neudurchführung von Einzeltests so lange wiederholt wird, bis alle Einzeltests bestanden worden sind und die Steuereinrichtung (21) den Fahrzeugtest insgesamt als bestanden ansieht oder der Zyklus durch Eingabe eines Abbruchsbefehls an der Eingabeeinrichtung bedienerseitig abgebrochen wird.

7. Schnittstelleneinrichtung (20) nach einem der voranstehenden Ansprüche,
**dadurch gekennzeichnet, dass**
- der Fahrzeugtest eine benutzergeführte Bremsprobe ist und
- zumindest einer der Einzeltests ein Komponententest ist, der Komponenten eines Bremssystems des Schienenfahrzeugs testet.

8. Eisenbahnschienenfahrzeug,
**dadurch gekennzeichnet, dass**
das Eisenbahnschienenfahrzeug mit einer Schnittstelleneinrichtung (20) nach einem der voranstehenden Ansprüche ausgestattet ist.

9. Eisenbahnschienenfahrzeug nach Anspruch 8,
**dadurch gekennzeichnet, dass**
die Anzeigeeinrichtung und die Eingabeeinrichtung der Schnittstelleneinrichtung (20) in einem an einem Ende des Eisenbahnschienenfahrzeugs befindlichen Führerstand (12) angeordnet ist.

10. Eisenbahnschienenfahrzeug nach Anspruch 9,
**dadurch gekennzeichnet, dass**
- das Eisenbahnschienenfahrzeug an seinem anderen Ende eine weitere Schnittstelleneinrichtung (20) nach einem der voranstehenden Ansprüche 1 bis 7 aufweist und
- die Steuereinrichtungen (21) der Schnittstelleneinrichtungen (20) jeweils dazu ausgestaltet sind, eine Übermittlung von Ergebnissen (E) von Fahrzeugtests und/oder durchgeführter Einzeltests (ET) vor, während oder nach einem im Rahmen eines Wendezugbetriebs vorgenommenen Führerstandswechsel an die Steuereinrichtung (21) der jeweils anderen Schnittstelleneinrichtung (20) zu übermitteln.

11. Eisenbahnschienenfahrzeug nach Anspruch 10,
**dadurch gekennzeichnet, dass**
die Steuereinrichtungen (21) empfangene Ergebnisse (E) der jeweils anderen Schnittstelleneinrichtung (20) als eigene Ergebnisse eigener Einzeltests beziehungsweise eigener Fahrzeugtests ansehen und als solche weiterverarbeiten.

12. Verfahren zum Steuern eines Fahrzeugtests eines Eisenbahnschienenfahrzeugs, wobei
- mittels einer Anzeigeeinrichtung einer Bedienperson der Schnittstelleneinrichtung (20) zumindest ein auswählbarer fahrzeugtestbezogener Befehl angezeigt wird und
- ein an einer Eingabeeinrichtung der Schnittstelleneinrichtung (20) bedienerseitig ausgewählter fahrzeugtestbezogener Befehl verarbeitet und eine Umsetzung des eingegebenen fahrzeugtestbezogenen Befehls veranlasst wird,
- wobei als fahrzeugtestbezogener Befehl ein einzeltestbezogener Befehl verarbeitet wird, der die individuelle Durchführung eines einzigen Einzeltests eines zwei oder mehr Einzeltests umfassenden Fahrzeugtests verlangt.

13. Verfahren nach Anspruch 12,
**dadurch gekennzeichnet, dass**
- nach Eingabe eines fahrzeugtestbezogenen Befehls, der die vollständige Durchführung aller Einzeltests des zwei oder mehr Einzeltests umfassenden Fahrzeugtests verlangt, alle Einzeltests parallel und/oder konsekutiv veranlasst werden,
- im Falle, dass der Fahrzeugtest wegen des Nichtbestehens eines oder mehrerer Einzeltests insgesamt nicht bestanden worden ist, der oder die nicht bestandenen Einzeltests angezeigt werden und eine individuelle Neudurchführung des oder der betroffenen Einzeltests angeboten wird,
- jeder individuell neu durchgeführte und bestandene Einzeltest auch bezüglich des Fahrzeugtests als bestanden angesehen wird und
- der Fahrzeugtest insgesamt als bestanden angesehen wird, sobald alle Einzeltests des Fahrzeugtests bestanden worden sind.

14. Computerprogrammprodukt (CPP) für eine Schnittstelleneinrichtung (20), insbesondere einer solchen nach einem der voranstehenden Ansprüche, zum Steuern eines Fahrzeugtests eines Eisenbahnschienenfahrzeugs, wobei das Computerprogrammprodukt (CPP) umfasst:
- ein Anzeigemodul, das zum Erzeugen von Anzeigesignalen geeignet ist, die zum Ansteuern einer Anzeigeeinrichtung der Schnittstelleneinrichtung (20) dienen und einer Bedienperson der Schnittstelleneinrichtung (20) zumindest einen auswählbaren fahrzeugtestbezogenen Befehl anzeigen, und
- ein Steuermodul zur Verarbeitung von bedienerseitig eingegebenen fahrzeugtestbezogenen Befehlen und zur Veranlassung einer Umsetzung der eingegebenen Befehle, wobei das Steuermodul dazu ausgestaltet ist, als fahrzeugtestbezogenen Befehl einen einzeltestbezogenen Befehl verarbeiten zu können, der die individuelle Durchführung eines einzigen Einzeltests eines zwei oder mehr Einzeltests umfassenden Fahrzeugtests verlangt.
